# FASCICULE DE BREVET EUROPEEN

(11) **EP 4 330 026 B1**
(45) Date de publication et mention de la délivrance du brevet: **04.06.2025**
(21) Numéro de dépôt: 22727213.5
(22) Date de dépôt: 28.04.2022
(51) Int. Cl.: B29D 30/46, B29D 30/06

(54) **DISPOSITIF ET PROCEDE DE DECOUPAGE D'UN PRODUIT INTERMEDIAIRE EN GOMME DE CAOUTCHOUC**
VORRICHTUNG UND VERFAHREN ZUM SCHNEIDEN EINES ZWISCHENPRODUKTS AUS KAUTSCHUK
DEVICE AND METHOD FOR CUTTING AN INTERMEDIATE PRODUCT MADE OF RUBBER

(30) Priorité: 30.04.2021 FR 2104556
(43) Date de publication de la demande: 06.03.2024
(73) Titulaire: COMPAGNIE GENERALE DES ETABLISSEMENTS MICHELIN, 63000 Clermont-Ferrand (FR)
(72) Inventeur: CROUZET, Marie, 63040 CLERMONT-FERRAND CEDEX 9 (FR)
(74) Mandataire: M.F.P. Michelin
(86) Numéro de dépôt international: PCT/FR2022/050806
(87) Numéro de publication internationale: WO 2022/229560

(56) Documents cités:
- EP-A1- 3 427 936
- JP-A- 2006 167 989
- JP-A- H01 171 793

## Description

L'invention se situe dans le domaine de la fabrication de produits à base de gomme de caoutchouc et, plus précisément, dans le domaine du découpage de produits intermédiaires entrant dans la fabrication d'un pneumatique ou d'une roue.

La fabrication d'un pneumatique ou d'une roue comprend des nombreuses étapes de découpage de produits intermédiaires prenant des formes variées, généralement longitudinales et profilées, telles des nappes ou des bandes obtenues par des procédés de calandrage ou d'extrusion. Certains produits intermédiaires sont à base de gomme de caoutchouc, de préférence à l'état cru, et comprennent également des éléments filaires de renfort, noyés dans la gomme crue, et parallèles entre eux.

La réalisation d'une découpe droite de produits intermédiaires renforcés comprend deux variantes selon que l'on souhaite obtenir une découpe droite parallèle aux éléments filaires de renfort, réalisée dans de la gomme crue, ou une découpe droite formant un angle avec les éléments filaires de renfort et, par conséquent, sectionnant les éléments filaires de renfort.

Obtenir une découpe droite selon la première variante s'avère particulièrement difficile sans sectionner par erreur les éléments filaires de renfort adjacents. Par conséquent, les moyens de découpage employés pour la réalisation d'une découpe droite sont généralement prévus résistants à l'usure ou au bris pour sectionner des éléments filaires de renfort, ce qui s'avère couteux.

Afin de réaliser une découpe droite parallèle aux éléments filaires de renfort, on connait un procédé utilisant un ciseau que l'on insère d'un côté d'un produit intermédiaire, dans la gomme crue entre deux éléments filaires, que l'on déplace selon une direction généralement parallèle aux éléments filaires de renforts, un guidage précis du ciseau étant assuré par les deux éléments filaires, et que l'on extrait d'un autre côté du produit intermédiaire.

Un tel procédé est particulièrement adapté lorsque le produit intermédiaire est destiné à être assemblé sur une ébauche de pneumatique à l'aide d'un tambour d'assemblage, car la découpe peut être réalisée en même temps que l'assemblage, sans introduire de manipulations du produit intermédiaire découpé.

Toutefois, un tel procédé ne convient pas lorsque le produit intermédiaire est destiné à être moulé, car la découpe droite ne peut pas être réalisée en temps masqué, et introduit, préalablement au moulage, une ou plusieurs manipulations du produit intermédiaire découpé. Le document de brevet EP 3 427 936 A1 divulgue les caractéristiques du préambule de la revendication indépendante 1.

Il existe donc un besoin pour un procédé de découpage de produits intermédiaires renforcés remédiant à ces inconvénients.

En conséquence, l'invention propose un dispositif de découpage d'un produit intermédiaire en gomme de caoutchouc, le produit intermédiaire comprenant des éléments filaires de renfort noyés dans la gomme et parallèles entre eux,
le dispositif de découpage comprenant un support, une lame, et un porte-lame mobile entre une position d'ouverture et une position de fermeture dans laquelle la lame vient au contact du support.

Selon l'invention, la lame est montée de manière lâche sur le porte-lame de sorte que la lame est mobile en pivotement et/ou en translation par rapport au porte-lame.

La lame comporte une direction longitudinale, une direction transversale, et une direction de lacet sensiblement parallèle à une direction de fermeture du porte-lame. La lame est mobile en pivotement autour, et/ou en translation le long d'une ou de plusieurs desdites directions par rapport au porte-lame.

De préférence, le produit intermédiaire est à base de gomme de caoutchouc crue.

Lorsque le porte-lame est amené en position de fermeture, le produit intermédiaire ayant été préalablement positionné de manière que ses éléments filaires de renfort soient sensiblement parallèles à la direction longitudinale de la lame en position de fermeture du porte-lame, la lame pénètre dans la gomme crue du produit intermédiaire et la fait fluer de part et d'autre de la lame. Puis, au contact éventuel d'un des éléments filaires de renfort, la lame pivote et/ou se translate jusqu' à ce qu'elle puisse glisser sur le bord dudit élément, voire le repousser.

Ainsi, la découpure est réalisée sans sectionner d'éléments filaires de renfort, de manière que le tranchant de la lame soit moins sollicité et s'use moins rapidement.

De préférence, le porte-lame comporte un logement, dans lequel la lame est montée, qui permet de limiter le pivotement et la translation de la lame.

L'amplitude en pivotement et en translation de la lame lui permet de compenser un défaut de parallélisme entre les éléments filaires de renfort et la direction longitudinale de la lame en position de fermeture du porte-lame, inférieur ou égal à un pas espaçant les éléments filaires de renfort.

A titre d'exemple, la lame est libre en rotation autour desdites directions d'un angle allant de plus à moins 2,5°, et libre en translation le long desdites directions d'une distance allant de plus à moins 2,5 mm, par rapport à une position dans laquelle la lame est centrée dans son logement.

A titre d'exemple, le pas espaçant les éléments filaires de renfort varie de 0,5 à 10 mm.

Avantageusement, la lame se translate uniquement le long d'une direction de lacet par rapport au porte-lame, les autres possibilités de mouvement de la lame par rapport au porte-lame étant sensiblement supprimées.

Autrement dit, les possibilités de mouvement de la lame par rapport au porte-lame, autres que la translation selon la direction de lacet, sont fortement limitées.

A titre d'exemple, la lame est fortement limitée en rotation autour des directions concernées d'un angle allant de plus à moins 0,25°, et fortement limitée en translation le long des directions concernées d'une distance allant de plus à moins 0,25 mm, par rapport à une position dans laquelle la lame est centrée dans son logement.

A titre d'exemple, l'amplitude en translation de la lame selon la direction de lacet varie de 0,5 mm à 10 mm.

Ainsi, la construction du dispositif de découpage est optimisée, tout en conservant un fonctionnement aussi efficace.

Avantageusement, le dispositif de découpage comprend des moyens élastiques agencés entre la lame et le porte-lame.

Lorsque la lame vient au contact éventuel d'un des éléments filaires de renfort, elle s'immobilise et le porte-lame poursuit son mouvement vers la position de fermeture en comprimant les moyens élastiques. Lorsque les moyens élastiques exercent sur la lame une contrainte suffisante, la lame repousse ledit élément, puis glisse sur son bord.

Ainsi, la découpure est réalisée nettement et sans bavures.

De préférence, en position de fermeture du porte-lame, les moyens élastiques exercent sur la lame une contrainte suffisante pour permettre à la lame de se glisser entre deux éléments filaires de renfort en faisant fluer la gomme crue, mais inférieure à la contrainte de fermeture appliquée au porte-lame et/ou à la contrainte susceptible de sectionner un des éléments filaires de renfort.

La contrainte suffisante dépend notamment de la forme et de l'orientation de la lame, des propriétés physiques de la gomme crue, de l'épaisseur du produit intermédiaire, de la longueur de la découpure, du pas et du diamètre des éléments filaires de renfort.

A titre d'exemple, le diamètre des éléments filaires de renfort varie de 0,2 à 5 mm.

Avantageusement, le support comporte une entaille dans laquelle la lame vient s'insérer lorsque le porte-lame est amené en position de fermeture.

Ainsi, le tranchant de lame ne vient pas directement en appui sur le support, de sorte que la lame est moins sollicitée et s'use moins rapidement.

L'invention a également pour objet un moule de cuisson d'un produit intermédiaire, comprenant au moins un dispositif de découpage selon un précédent objet de l'invention, au moins deux empreintes de moulage de produits intermédiaires découpés, le dispositif de découpage étant agencé de manière que la position d'ouverture du dispositif de découpage corresponde à la position d'ouverture du moule, et que la position de fermeture du dispositif de découpage corresponde à la position de fermeture du moule.

De préférence, le moule comprend une partie supérieure et une partie inférieure qui se joignent, lorsque le moule est en position de fermeture, le long d'un contour, ledit contour divisant chaque empreinte de moulage. La partie supérieure du moule comporte les divisions supérieures des empreintes, le porte-lame et la lame. La partie inférieure du moule comporte les divisions inférieures des empreintes, et le support.

Lorsque le moule est amené en position de fermeture, le dispositif de découpage découpe le produit intermédiaire, le produit intermédiaire ayant été préalablement positionné dans le moule de manière que ses éléments filaires de renfort soient sensiblement parallèles à la direction longitudinale de la lame. Les produits intermédiaires découpés sont alors cuits dans chacune des empreintes de moulage.

Ainsi, le produit intermédiaire est découpé en temps masqué, pendant la fermeture du moule, et le procédé de découpage selon l'invention n'introduit pas, préalablement au moulage, une ou plusieurs manipulations du produit intermédiaire découpé, contrairement au dispositif de découpage et de cuisson de l'état de la technique.

De préférence, les moyens élastiques exercent sur la lame une contrainte suffisante pour permettre à la lame de se glisser entre deux éléments filaires de renfort en faisant fluer la gomme crue, le produit intermédiaire étant soumis, lorsque le moule est en position de fermeture, à une pression de moulage donnée.

La pression de moulage dépend notamment de la forme de l'empreinte au regard de celle du produit intermédiaire, de la viscosité de la gomme crue, du volume et de l'orientation de la lame, du pas et du diamètre des éléments filaires de renfort.

A titre d'exemple, la pression de moulage à l'intérieur du moule varie de 1 à 50 bar.

Avantageusement, en position de fermeture du moule, la lame forme une séparation entre chaque empreinte.

Ainsi, les parois latérales de la lame font partie de la surface de moulage du moule de cuisson.

Avantageusement, l'épaisseur de la lame est inférieure ou égale à 2 mm et, de préférence, inférieure ou égale à 1 mm.

Ainsi, la contrainte suffisante pour permettre à la lame de se glisser entre deux éléments filaires de renfort est limitée.

Par ailleurs, la section de la lame étant également limitée, la contrainte à laquelle elle est soumise du fait de la pression de moulage est réduite.

Avantageusement, le moule de cuisson comprend des moyens de positionnement du produit intermédiaire.

De préférence, les moyens de positionnement sont formés par les divisions inférieures des empreintes.

Ainsi, les moyens de positionnement permettent une mise en place rapide du produit intermédiaire sur le support, de manière que ses éléments filaires de renfort soient sensiblement parallèles à la direction longitudinale de la lame en position de fermeture du porte-lame.

L'invention a également pour objet un procédé de moulage d'un produit intermédiaire en gomme de caoutchouc, à l'aide d'un moule de cuisson selon un précédent objet de l'invention, le procédé comprenant les étapes suivantes :
- on positionne le produit intermédiaire sur le support de manière que les éléments filaires de renfort soient sensiblement parallèles à la direction longitudinale de la lame en position de fermeture du moule,
- on amène le porte-lame en position de fermeture.

Ainsi, le produit intermédiaire peut être positionné de manière approximative, la lame étant apte à compenser un défaut de parallélisme entre les éléments filaires de renfort et la direction longitudinale de la lame en position de fermeture du porte-lame.

Avantageusement, préalablement à l'étape de positionnement du produit intermédiaire, on réalise une prédécoupe du produit intermédiaire.

Ainsi, la lame est guidée par la prédécoupe du produit intermédiaire, ce qui facilite son découpage.

Par ailleurs, le volume de gomme du produit intermédiaire à faire fluer de part et d'autre de la lame est réduit, et les sollicitations s'exerçant sur la lame sont réduites.

L'invention sera mieux comprise grâce à la suite de la description, qui s'appuie sur les figures suivantes :
- la figure 1 est une vue simplifiée de certains éléments du dispositif de découpage selon l'invention en position d'ouverture ;
- la figure 2 est une vue simplifiée de certains éléments du dispositif de découpage selon l'invention se déplaçant vers une position de fermeture ;
- la figure 3 est une vue en coupe longitudinale de l'invention selon un mode préféré de réalisation ;
- la figure 4 est une vue en coupe longitudinale de l'invention selon un mode préféré de réalisation .

Sur les différentes figures, les éléments identiques ou similaires portent la même référence. Leur description n'est donc pas systématiquement reprise.

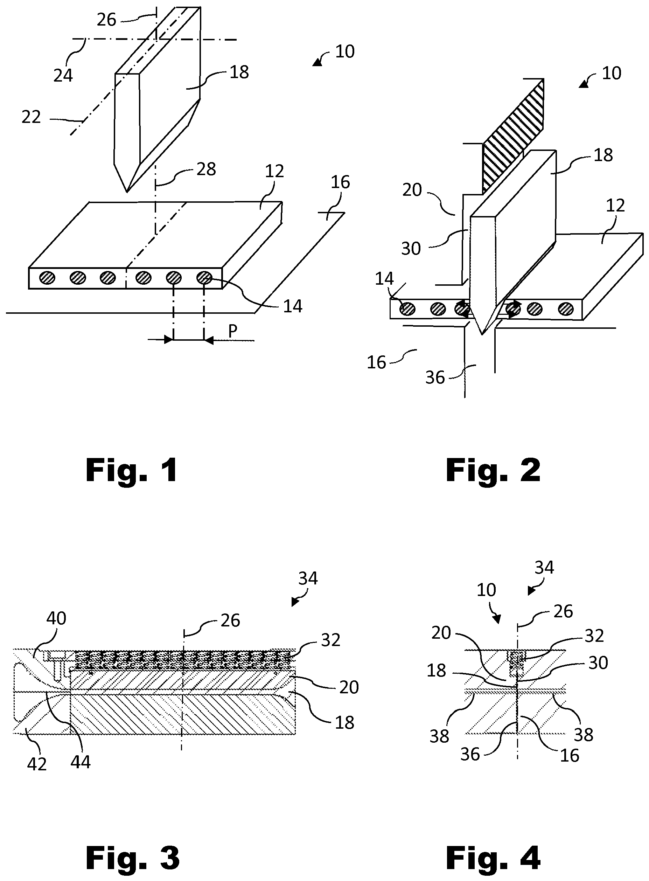

On a illustré aux figures 1 et 2 un dispositif de découpage 10 d'un produit intermédiaire 12 en gomme de caoutchouc crue, le produit intermédiaire comprenant des éléments filaires 14 de renfort noyés dans la gomme et parallèles entre eux. A titre d'exemples, les éléments filaires de renfort sont synthétiques ou métalliques, et leur diamètre va de 0,2 à 5 mm, et le pas P espaçant les éléments filaires de renfort va de 0,5 à 10 mm. Le dispositif de découpage 10 comprend un support 16, une lame 18, et un porte-lame 20 mobile entre une position d'ouverture et une position de fermeture dans laquelle la lame vient au contact du support. L'épaisseur de la lame 18 est inférieure ou égale à 2 mm et, de préférence, inférieure ou égale à 1 mm.

La lame 18 est montée de manière lâche sur le porte-lame 20 de sorte que la lame est mobile en pivotement et/ou en translation par rapport au porte-lame. La lame comporte une direction longitudinale 22, une direction transversale 24, et une direction de lacet 26 sensiblement parallèle à une direction de fermeture 28 du porte-lame. La lame est mobile en pivotement autour, et/ou en translation le long d'une ou de plusieurs desdites directions par rapport au porte-lame. Le porte-lame comporte un logement 30, dans lequel la lame est montée, qui permet de limiter le pivotement et la translation de la lame. La lame 18 est liée au porte-lame 20 par tout moyen adapté (non représenté). A titre d'exemple, la lame peut être liée au porte-lame par l'intermédiaire de rivets fixés dans le porte-lame et traversant des orifices de la lame de manière lâche.

Selon un mode préféré de réalisation de l'invention illustré aux figures 3 et 4, la lame 18 se translate uniquement le long d'une direction de lacet 26 par rapport au porte-lame 20. La lame est montée dans le porte-lame selon un ajustement adapté lui permettant de coulisser librement dans le logement 30 et, par conséquent, de former une liaison glissière avec le porte-lame. A titre d'exemple, la lame 18 peut coulisser selon la direction de lacet 26 avec une amplitude allant de 0,5 mm à 10 mm. Les autres possibilités de mouvement de la lame par rapport au porte-lame sont sensiblement supprimées. Autrement dit, les possibilités de mouvement de la lame par rapport au porte-lame, autres que la translation selon la direction de lacet, sont fortement limitées. A titre d'exemple, la lame est fortement limitée en rotation autour des directions concernées d'un angle allant de plus à moins 0,25°, et fortement limitée en translation le long des directions concernées d'une distance allant de plus à moins 0,25 mm, par rapport à une position dans laquelle la lame est centrée dans le logement.

Le dispositif de découpage comprend des moyens élastiques 32 agencés dans le logement 30, entre la lame 18 et le porte-lame 20. A titre d'exemples, les moyens élastiques peuvent prendre la forme de ressorts hélicoïdaux ou d'empilements de rondelles élastiques. En position de fermeture du porte-lame 20, les moyens élastiques 32 exercent sur la lame 18 une contrainte suffisante pour permettre à la lame de se glisser entre deux éléments filaires 14 de renfort en faisant fluer la gomme crue, mais inférieure à la contrainte de fermeture appliquée au porte-lame et/ou à la contrainte susceptible de sectionner un des éléments filaires 14 de renfort. La contrainte suffisante dépend notamment de la forme et de l'orientation de la lame, des propriétés physiques de la gomme crue, de l'épaisseur du produit intermédiaire, de la longueur de la découpure, du pas et du diamètre des éléments filaires de renfort.

Les figures 3 et 4 illustrent également un moule 34 de cuisson d'un produit intermédiaire 12, comprenant au moins un dispositif de découpage 10, au moins deux empreintes 38 de moulage de produits intermédiaires découpés. Le dispositif de découpage 10 est agencé de manière que la position d'ouverture du dispositif de découpage corresponde à la position d'ouverture du moule, et que la position de fermeture du dispositif de découpage corresponde à la position de fermeture du moule. En position de fermeture du moule 34, la lame 18 forme une séparation entre chaque empreinte 38. Autrement dit, les parois latérales de la lame font partie de la surface de moulage du moule de cuisson. Le support 16 comporte une entaille 36 dans laquelle la lame 18 vient s'insérer lorsque le porte-lame 20 est amené en position de fermeture. Le moule 34 comprend des moyens de positionnement du produit intermédiaire, formés par les divisions inférieures des empreintes 38.

Le moule 34 comprend une partie supérieure 40 et une partie inférieure 42 qui se joignent, lorsque le moule est en position de fermeture, le long d'un contour 44, ledit contour divisant chaque empreinte 38. La partie supérieure 40 du moule comporte les divisions supérieures des empreintes, le porte-lame 20 et la lame 18. La partie inférieure 42 du moule comporte les divisions inférieures des empreintes, et le support 16. Les moyens élastiques 32 exercent sur la lame 18 une contrainte suffisante pour permettre à la lame de se glisser entre deux éléments filaires 14 de renfort en faisant fluer la gomme crue, le produit intermédiaire 12 étant soumis, lorsque le moule 34 est en position de fermeture, à une pression de moulage donnée. La pression de moulage dépend notamment de la forme d'une empreinte au regard de celle du produit intermédiaire 12, de la viscosité de la gomme crue, du volume et de l'orientation de la lame 18, du pas et du diamètre des éléments filaires 14 de renfort. A titre d'exemple, la pression de moulage à l'intérieur du moule 34 varie de 1 à 50 bar.

Un procédé de moulage d'un produit intermédiaire 12 en gomme de caoutchouc, à l'aide d'un moule de cuisson 34, comprend les étapes suivantes :
- optionnellement, on réalise une prédécoupe du produit intermédiaire 12,
- on positionne le produit intermédiaire 12, à l'aide des moyens de positionnement, sur le support 16 de manière que les éléments filaires de renfort 14 soient sensiblement parallèles à la direction longitudinale 22 de la lame 18 en position de fermeture du moule,
- on amène le porte-lame 20 en position de fermeture.

Lorsque le porte-lame 20 est amené en position de fermeture, la lame 18 pénètre dans la gomme crue du produit intermédiaire 12 et la fait fluer de part et d'autre de la lame. Puis, au contact éventuel d'un des éléments filaires 14 de renfort, la lame pivote et/ou se translate jusqu'à ce qu'elle puisse glisser sur le bord dudit élément, voire le repousser.

Selon un mode préféré de réalisation de l'invention, lorsque la lame 18 vient au contact éventuel d'un des éléments filaires 14 de renfort, elle s'immobilise et le porte-lame 20 poursuit son mouvement vers la position de fermeture en comprimant les moyens élastiques 32. Lorsque les moyens élastiques exercent sur la lame une contrainte suffisante, la lame repousse ledit élément 14, puis glisse sur son bord.

Le produit intermédiaire 12 est découpé pendant la fermeture du moule 34. Les produits intermédiaires découpés sont alors cuits dans chacune des empreintes 36 de moulage.

D'autres variantes et modes de réalisation de l'invention peuvent être envisagés sans sortir du cadre de ses revendications.

## Revendications

1. Dispositif de découpage (10) d'un produit intermédiaire (12) en gomme de caoutchouc, le produit intermédiaire comprenant des éléments filaires (14) de renfort noyés dans la gomme et parallèles entre eux,
le dispositif de découpage (10) comprenant un support (16), une lame (18), et un porte-lame (20) mobile entre une position d'ouverture et une position de fermeture dans laquelle la lame vient au contact du support,
**caractérisé en ce que** la lame (18) est montée de manière lâche sur le porte-lame (20) de sorte que la lame est mobile en pivotement et/ou en translation par rapport au porte-lame.

2. Dispositif de découpage selon la revendication 1, dans lequel la lame (18) se translate uniquement le long d'une direction de lacet (26) par rapport au porte-lame (20), les autres possibilités de mouvement de la lame par rapport au porte-lame étant sensiblement supprimées.

3. Dispositif de découpage selon l'une des revendications 1 à 2, comprenant des moyens élastiques (32) agencés entre la lame (18) et le porte-lame (20).

4. Dispositif de découpage selon l'une des revendications 1 à 3 dans lequel le support (16) comporte une entaille (36) dans laquelle la lame (18) vient s'insérer lorsque le porte-lame (20) est amené en position de fermeture.

5. Moule de cuisson (34) d'un produit intermédiaire (12), comprenant au moins un dispositif de découpage (10) selon l'une des revendications 1 à 4, au moins deux empreintes de moulage (38) de produits intermédiaires découpés, le dispositif de découpage étant agencé de manière que la position d'ouverture du dispositif de découpage (10) corresponde à la position d'ouverture du moule (34), et que la position de fermeture du dispositif de découpage (10) corresponde à la position de fermeture du moule (34).

6. Moule de cuisson selon la revendication 5 dans lequel, en position de fermeture du moule (34), la lame (18) forme une séparation entre chaque empreinte (38).

7. Moule de cuisson selon l'une des revendications 5 à 6 dans lequel l'épaisseur de la lame (18) est inférieure ou égale à 2 mm et, de préférence, inférieure ou égale à 1 mm.

8. Moule de cuisson selon l'une des revendications 5 à 7, comprenant des moyens de positionnement du produit intermédiaire (12).

9. Procédé de moulage d'un produit intermédiaire en gomme de caoutchouc à l'aide d'un moule de cuisson (34) selon l'une des revendications 5 à 8,
le procédé comprenant les étapes suivantes :
- on positionne le produit intermédiaire (12) sur le support (16) de manière que les éléments filaires (14) de renfort soient sensiblement parallèles à la direction longitudinale (22) de la lame en position de fermeture du moule (3),
- on amène le porte-lame (20) en position de fermeture.

10. Procédé de moulage selon la revendication 9, dans lequel, préalablement à l'étape de positionnement du produit intermédiaire, on réalise une prédécoupe du produit intermédiaire (12).

## Patentansprüche

1. Schneidvorrichtung (10) zum Schneiden eines Zwischenprodukts (12) aus Kautschukgummi, wobei das Zwischenprodukt fadenförmige Verstärkungselemente (14) umfasst, die in das Gummi eingebettet sind und parallel zueinander sind,
die Schneidvorrichtung (10) umfassend einen Träger (16), eine Klinge (18) und einen Klingenhalter (20), der zwischen einer Öffnungsstellung und einer Schließstellung, in der die Klinge mit dem Träger in Kontakt gelangt, beweglich ist,
**dadurch gekennzeichnet, dass** die Klinge (18) locker an dem Klingenhalter (20) montiert ist, so dass die Klinge in Bezug auf den Klingenhalter schwenkend und/oder translatorisch beweglich ist.

2. Schneidvorrichtung nach Anspruch 1, wobei die Klinge (18) nur entlang einer Gierrichtung (26) in Bezug auf den Klingenhalter (20) translatiert, wobei die anderen Bewegungsmöglichkeiten der Klinge in Bezug auf den Klingenhalter im Wesentlichen unterdrückt werden.

3. Schneidvorrichtung nach einem der Ansprüche 1 bis 2, umfassend elastische Mittel (32), die zwischen der Klinge (18) und dem Klingenhalter (20) angeordnet sind.

4. Schneidvorrichtung nach einem der Ansprüche 1 bis 3, wobei der Träger (16) eine Kerbe (36) beinhaltet, in welche die Klinge (18) eingeführt wird, wenn der Klingenhalter (20) in die Schließstellung geführt wird.

5. Vulkanisationsform (34) für ein Zwischenprodukt (12), umfassend mindestens eine Schneidvorrichtung (10) nach einem der Ansprüche 1 bis 4, mindestens zwei Formvertiefungen (38) für geschnittene Zwischenprodukte, wobei die Schneidvorrichtung so angeordnet ist, dass die Öffnungsstellung der Schneidvorrichtung (10) der Öffnungsstellung der Form (34) entspricht und dass die Schließstellung der Schneidvorrichtung (10) der Schließstellung der Form (34) entspricht.

6. Vulkanisationsform nach Anspruch 5, wobei, in der Schließstellung der Form (34), die Klinge (18) eine Trennung zwischen jeder Vertiefung (38) bildet.

7. Vulkanisationsform nach einem der Ansprüche 5 bis 6, wobei die Dicke der Klinge (18) 2 mm oder weniger beträgt und bevorzugt 1 mm oder weniger beträgt.

8. Vulkanisationsform nach einem der Ansprüche 5 bis 7, umfassend Mittel zur Positionierung des Zwischenprodukts (12).

9. Verfahren zum Formen eines Zwischenprodukts aus Kautschukgummi mithilfe einer Vulkanisationsform (34) nach einem der Ansprüche 5 bis 8,
wobei das Verfahren die folgenden Schritte umfasst:
- Positionieren des Zwischenprodukts (12) auf dem Träger (16) derart, dass die fadenförmigen Verstärkungselemente (14) im Wesentlichen parallel zu der Längsrichtung (22) der Klinge in der Schließstellung der Form (3) sind,
- Führen des Klingenhalters (20) in die Schließstellung.

10. Verfahren zum Formen nach Anspruch 9, wobei, vor dem Schritt des Positionierens des Zwischenprodukts, ein Vorschneiden des Zwischenprodukts (12) ausgeführt wird.

## Claims

1. Device (10) for cutting an intermediate product (12) made of rubber, the intermediate product comprising filamentary reinforcing elements (14) embedded in the rubber and parallel to one another, the cutting device (10) comprising a support (16), a blade (18), and a blade holder (20) movable between an open position and a closed position in which the blade comes into contact with the support,
**characterized in that** the blade (18) is loosely mounted on the blade holder (20) so that the blade is pivotable and/or movable in translation relative to the blade holder.

2. Cutting device according to Claim 1, wherein the blade (18) translates only along a yaw direction (26) relative to the blade holder (20), the other possibilities of movement of the blade relative to the blade holder being substantially eliminated.

3. Cutting device according to one of Claims 1 to 2, comprising elastic means (32) arranged between the blade (18) and the blade holder (20).

4. Cutting device according to one of Claims 1 to 3, wherein the support (16) comprises a notch (36) into which the blade (18) is inserted when the blade holder (20) is brought into the closed position.

5. Curing mould (34) for an intermediate product (12), comprising at least one cutting device (10) according to one of Claims 1 to 4, at least two moulding cavities (38) for cut intermediate products, the cutting device being arranged so that the open position of the cutting device (10) corresponds to the open position of the mould (34), and that the closed position of the cutting device (10) corresponds to the closed position of the mould (34).

6. Curing mould according to Claim 5 wherein, in the closed position of the mould (34), the blade (18) forms a separation between each cavity (38).

7. Curing mould according to one of Claims 5 to 6, wherein the thickness of the blade (18) is less than or equal to 2 mm and, preferably, less than or equal to 1 mm.

8. Curing mould according to one of Claims 5 to 7, comprising means for positioning the intermediate product (12).

9. Method for moulding an intermediate product made of rubber using a curing mould (34) according to one of Claims 5 to 8, the method comprising the following steps:
- the intermediate product (12) is positioned on the support (16) so that the filamentary reinforcing elements (14) are substantially parallel to the longitudinal direction (22) of the blade in the closed position of the mould (3),
- the blade holder (20) is brought into the closed position.

10. Moulding method according to Claim 9, wherein, prior to the step of positioning the intermediate product, the intermediate product (12) is pre-cut.
